# EUROPEAN PATENT APPLICATION

(11) **EP 1 775 066 A1**
(43) Date of publication of application: **18.04.2007**
(21) Application number: 05748568.2
(22) Date of filing: 09.06.2005
(51) Int. Cl.: B23Q 37/00

(54) **WELDING SYSTEM**

(30) Priority: 13.07.2004 JP 2004205597
(71) Applicant: Ishikawajima-Harima Heavy Industries Co., Ltd., Tokyo 135-8710 (JP)
(72) Inventor: IIMURA, Kenji, Tokyo 1358710 (JP); YAMASAKI, Shusaku, Tokyo 1358710 (JP); UEHARA, Minoru, Tokyo 1358710 (JP); OOWAKI, Katsura, Tokyo 1358710 (JP)
(74) Representative: Lamb, Martin John Carstairs
(86) International application number: PCT/JP2005/010601
(87) International publication number: WO 2006/006328

(57) **Abstract**

A weld system has a positioning welding module 7 comprising a material positioning device 3 and a welding device 5 capable of welding material pieces W1 and W3 positioned by the material positioning device 3, a material module 11 for stocking the material pieces W1 and W3 to be supplied to the positioning welding module 7, and a product module 15 for stocking products W5 welded at the positioning welding module 7.

## Description

### TECHNICAL FIELD

The present invention relates to a weld system and in particular relates to a system in which functions are respectively formed in modules and the modules are organically combined.

### BACKGROUND ART

As a prior weld system, that configured to supply plate-like material pieces in a manner of sheet-feeding, which is stocked in a material stocker, and stock welded products in a product stocker is known.

Further, at a time of producing weld systems as the prior art, design and production are done in each case in compliance with demands of users, such as shapes of the material pieces, a form of parts to be welded, and the number of production.

Meanwhile, as that relating to the prior weld device, for example, a weld device recited in the patent document (Japanese Patent Application Laid-open No. 2002-239788) is known.

By the way, at a time of building the prior weld system, because design and production of the whole of the weld system are done in each case in compliance with demands of individual users, problems are raised in that the design and the production require a long time and cannot flexibly respond to the demands of the individual users.

The present invention has been achieved in view of the above problems and is intended for providing a weld system to produce products in which material pieces are welded, in that the weld system is capable of flexibly responding to demands of individual users.

### DISCLOSURE OF INVENTION

An invention based on a first aspect of the present invention is a weld system constituted by installing a device of an apparatus having a function required for welding material pieces to generate products in frames standardized in advance to form device modules, and the weld system is constituted by combining modules having the respective functions to generate the products.

An invention based on a second aspect of the present invention is a weld system as recited in the first aspect, in that the device or the apparatus having the function is provided in the frame and a physical barrier for ensuring safety of workers at a time of action of the device or the apparatus, welding and processing is provided on the module.

An invention based on a third aspect of the present invention is a weld system as recited in the first aspect or the second aspect, in that the weld system comprises a plurality of modules and a transportation system for transportation of the material pieces and the products in common for the respective modules.

An invention based on a fourth aspect of the present invention is a weld system as recited in the first aspect or the second aspect, in that the weld system comprises a plurality of modules and the respective modules individually comprise transportation systems for transportation of the material pieces and the products.

An invention based on a fifth aspect of the present invention is a weld system as recited in any of the first through fourth aspects, in that the weld system has as the modules; a positioning welding module comprising a material piece positioning device and a welding device capable of welding material pieces positioned by the material piece positioning device; a material module for stocking material pieces to be supplied to the positioning welding module; and a product module for stocking products welded at the positioning welding module.

An invention based on a sixth aspect of the present invention is a weld system as recited in the fifth aspect, in that the weld system comprises as the module; a material inspection module for inspecting the material pieces to be supplied to the positioning welding module between the material module and the positioning welding module.

An invention based on a seventh aspect of the present invention is a weld system as recited in the fifth aspect or the sixth aspect, in that the weld system comprises as the module; an inspection module for inspecting products welded at the positioning welding module between the positioning welding module and the product module.

An invention based on an eighth aspect of the present invention is a weld system as recited in any of the fifth through seventh aspects, in that the weld system comprises as the module; a traverse module having a function of branching flows of the material pieces and the products, or a function of merging flows of the material pieces and the product.

### BRIEF DESCRIPTION OF DRAWINGS

[FIG. 1] Fig. 1 is a perspective view showing an outlined configuration of a weld system according to a first embodiment of the present invention.
[FIG. 2] Fig. 2 is a plan view showing an outlined configuration of a positioning device of a positioning welding module, and a weld device.
[FIG. 3] Fig. 3 is a drawing illustrating an action of the positioning welding module.
[FIG. 4] Fig. 4 is a drawing showing material pieces to be welded by the weld system.
[FIG. 5] Fig. 5 is a perspective view showing an outlined configuration of a weld system according to a second embodiment of the present invention.
[FIG. 6] Fig. 6 is a plan view showing an outlined configuration of a weld system according to a third embodiment of the present invention.
[FIG. 7] Fig. 7 is a perspective view showing an outlined configuration of a weld system according to a fourth embodiment of the present invention.
[FIG. 8] Fig. 8 is a perspective view showing an outlined configuration of a weld system according to a fifth embodiment of the present invention.

### BEST MODE FOR CARRYING OUT THE INVENTION

A weld system in accordance with an embodiment of the present invention is a weld system in which devices and apparatuses comprised of respective functions required for welding material pieces to generate products are installed in a frame standardized in advance to form device modules and the modules having respective functions for generating the products are combined.

Further, the modules are so configured to be easily replaced when specifications of the material pieces and the products are changed.

Moreover, the devices and the apparatuses comprised of the functions are installed in the interior of the frame, and physical barriers for ensuring safety of workers (workmen) at a time of action of the device and the apparatuses, welding and processing are installed on the modules.

Moreover, the weld system is provided with the plurality of modules and a transport system for transportation of the material pieces and the products, which is provided in common for the respective modules.

Meanwhile, there may be a case in which the respective modules are individually provided with transport systems for transportation of the material pieces and the products.

By respective embodiments shown hereinafter, the weld system will be described in further detail.

### [FIRST EMBODIMENT]

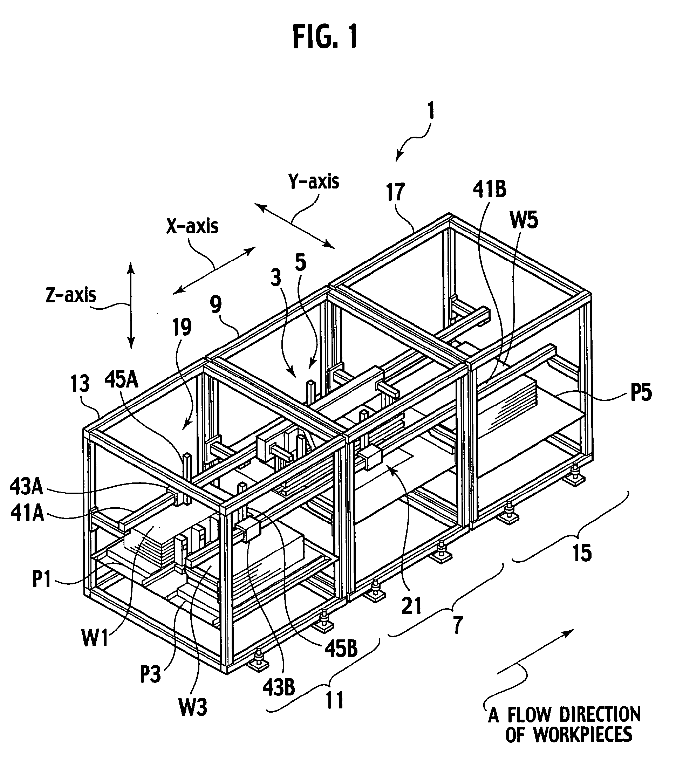

Fig. 1 is a perspective view showing an outlined configuration of a weld system 1 in accordance with a first embodiment of the present invention.

The weld system 1 is applied as a system for mutually welding plate-like material pieces formed by a blanking process for example or such to produce products.

The weld system 1 is provided with a positioning device 3 as a module, and a positioning welding module 7 provided with a weld device 5 capable of welding material pieces positioned by the positioning device 3 by means of laser light for example.

The positioning device 3 and the weld device 5 are installed in a frame 9. The frame 9 is standardized by forming the external form in a rectangular parallelepiped or a cube. Each edge of the frame 9 is formed by welding square pipes with each other or tightening them by means of tightening means such as bolts.

Further, the weld system 1 is provided with a material module 11 for stocking material pieces W1 and W3 to be supplied to the positioning welding module 7, and a product module 15 for stocking products W5 welded at the positioning welding module 7.

The material module 11 is so configured as to stock material pieces in a frame 13 configured similarly to the frame 9, and the product module 15 is so configured as to stock products in a frame 17 configured similarly to the frame 9. Meanwhile, the respective frames 9, 13 and 17 are formed in a similar shape but are not required to be in the same shape.

Because the respective modules 7, 11 and 15 are formed as based on the respective frames (respectively individually existing frames) 9, 13 and 17, the frames as respective units (the modules as respective units) can be installed when the respective modules 7, 11 and 15 are installed to form the weld system 1.

Meanwhile, the material module 11, the positioning welding module 7, and the product module 15 are arranged to adjoin with each other in this order. Meanwhile, to have relative position relationship among the respective adjoining modules accurate, the adj oining modules are preferably connected with each other by means of connection members (not shown) or tightening members such as bolts.

Here, for convenience of explanation, a horizontal longitudinal direction in which the respective modules 11, 7 and 15 are arranged in this order is referred to as a X-axis direction, another horizontal direction perpendicular to the X-axis direction is referred to as a Y-axis direction, and a vertical direction is referred to as a Z-axis direction.

The weld system 1 is provided with a material transport means 19 for transportation of the material pieces W1 and W3 from the material module 11 to the positioning welding module 7, and a product transport means 21 for transportation of the products W5 from the positioning welding module 7 to the product module 15. In other words, transport means among the respective modules are installed. Meanwhile, the respective transport means 19 and 21 are installed in the interior of the respective frame 9, 13 and 17 forming the respective modules.

Further, in the respective modules 7, 11 and 15, physical barriers (not shown) for isolating the interiors from the exteriors of the respective modules 7, 11 and 15. The physical barriers are constructed by adhering plate-like steel sheets on the square pipes forming the frame 9 and such.

By providing the physical barriers, at a time of operating the weld system 1, safety of workers can be ensured. As the physical barriers, barriers for preventing the material pieces or the products under transportation in high speeds from running out of the frames, barriers for preventing workers from intruding into the interior of the frame, or barriers for preventing reflected lights of laser lights fromgoing out of the frames canbe considered.

Meanwhile, the physical barriers are provided with shutters or doors (not shown) for allowing the workers to enter into the physical barriers (in the weld system 1) at a time of maintenance or inspection. Further, by means of an interlock, the weld system 1 is so configured not to operate when the shutter or the doors are opened.

Further, the physical barriers are provided with windows (not shown) for observation of states of the material pieces and the products when the weld system 1 operates.

Here, the positioning welding module 7 will be described in further detail.

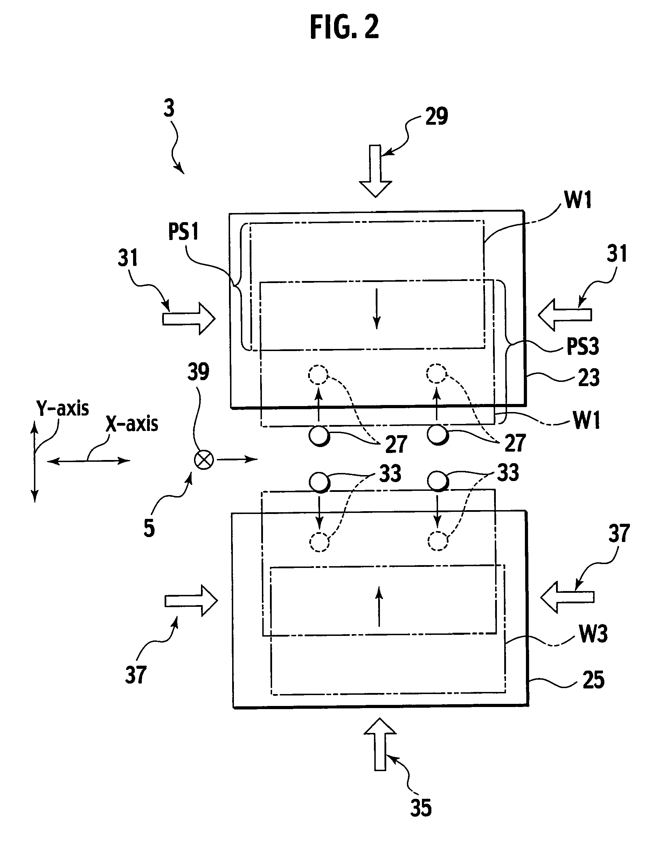

Fig. 2 is a plan view showing an outlined configuration of the positioning device 3 and the weld device 5 of the positioning welding module 7.

The positioning device 3 is provided with a table 23 for having the plate-like, substantially rectangular for example, material pieces W1 placed thereon, and a table 25 for having the plate-like substantially rectangular material pieces W3 placed thereon.

Meanwhile, the upper face of the table 23 (the face on which the material piece W1 is placed) and the upper face of the table 25 (the face on which the material piece W3 is placed) are positioned on the same plane, and the table 23 and the table 25 are arranged in a row along the Y-axis direction and made movable in the Y-axis direction so as to relatively come close to and apart from each other by means of a not-shown actuator such as a servo-motor.

Further, at a position where is slightly apart from an end portion of the table 23 (an end portion at a side of the table 25), a plurality of abutment members (pins) 27 for positioning the material piece W1 are installed. These respective pins 27 project upward from the upper face of the table 23 when positioning the material piece W1 but are capable of retracting to lower positions of the table 23 (positions shown by broken lines in Fig. 2) for avoiding interference to the respective material pieces W1 and W3 and the tables 23 and 25 by means of an actuator and a linkage such as a cylinder when butting and welding the respective material pieces W1 and W3.

The positioning device 3 is provided with a pressing device 29 for pressing the material piece W1 (the material piece W1 supplied at a position of PS1), which is supplied from the material module 11 onto the table 23 by means of the transport means 19, to the pins 27 so as to position the material piece W1 in the Y-axis direction. The pressing device 29 is configured to press the material piece W1 by means of an actuator such as a cylinder.

Moreover, the positioning device 3 is provided with a positioning device 31 for positioning the material piece W1 in the X-axis direction. The positioning device 31 is capable of pinching the material piece W1 by using a linkage driven by an actuator such as a cylinder so as to center the material piece W1 in the X-axis direction. Further, the material piece W1 positioned in both the Y-axis direction and the X-axis direction is made to exist at a position PS3 shown in Fig. 2.

Meanwhile, in the positioning device 31, as with the case of positioning in the Y-axis direction, positioning pins may be set and positioning may be carried out by pressing the material piece W1 on one side.

Further, the table 23 is provided with a first clamp device (not shown) for preventing the positioned material piece W1 from displacing when the table 23 moves. The first clamp device is so configured as to fix the material piece W1 by that an electromagnet filled in the table 23 attracts the material piece W1.

Moreover, for positioning the material piece W3 supplied by the transport means 19, the table 25 as well is provided with pins 33 similar to the pins 27, a pressing device 35 similar to the pressing device 29, a positioning device 37 similar to the positioning device 31, and a second clamp device (a clamp device similar to the first clamp of the table 23) for fixing the positioned material piece W3 to the table 25.

Further, a third clamp device (not shown) and a fourth clamp device (not shown) are installed for preventing the respective material pieces W1 and W3 from being deformed by heat of welding in a case where the respective material pieces W1 and W3 are butted and welded.

The third clamp device is so configured as to use a pressure device constituted of an actuator such as a cylinder to press the material device W1 in the vicinity of a weld line and along the weld line from above onto the table 23 to fix the material piece W1 to the table 23, and also the fourth clamp device is configured similarly to the third clamp device so as to press the material piece W3 from above onto the table 25 to fix the material piece W3 to the table 25.

The weld device 5 for welding the respective material pieces W1 and W3 is provided with a welding torch 39 emitting a laser light for example, and the welding torch 39 is configured to linearly move along the weld line of the respective material pieces W1 and W3, in the X-axis direction for example, by means of an actuator such as a servomotor and weld them.

Here, an action of the positioning welding module 7 will be described.

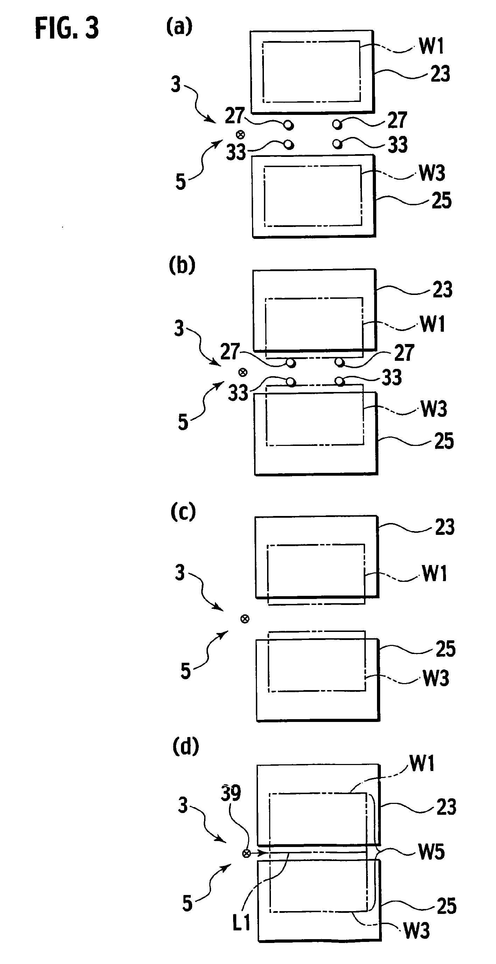

Fig. 3 is a drawing illustrating an action of the positioning welding module.

Fig. 3(a) shows a state just after that the respective material pieces W1 and W3 are placed on the tables 23 and 25 by means of the transport means 19 in an initial state. In the initial state, the table 23 and the table 25 are apart from each other and the respective pins 27 and 33 project upward from the upper faces of the respective tables 23 and 25.

During the state shown in Fig. 3(a) and a state shown in Fig. 3(b), positioning of the respective material pieces W1 and W3 is carried out, and the material piece W1 is fixed by means of the first clamp device and the material piece W3 is fixed by means of the second clamp device.

During the state shown in Fig. 3(b) and a state shown in Fig. 3(c), the respective pins 27 and 33 retract below the respective tables 23 and 25.

During the state shown in Fig. 3(c) and a state shown in Fig. 3(d), the respective tables 23 and 25 come closer to each other to put the respective material pieces W1 and W3 together and form a weld line L1, and further the material piece W1 is fixed by the third clamp device and the material piece W3 is fixed by the fourth clamp device.

During the state shown in Fig. 3(d) and a state shown in Fig. 3(a), the welding torch 39 moves along the weld line L1 and welds the material piece W1 and the material piece W3 together to form the product W5. Subsequently, clamping by the first to fourth clamp devices is cancelled, the product W5 is carried out by the transport means 21, the welding torch 39 returns back to a position prior to the start of welding, the respective tables 23 and 25 come apart from each other, the respective pins 27 and 33 project from the upper faces of the respective tables 23 and 25, and then the whole thereof returns to the initial state. Further, the next material pieces come to be placed on the tables 23 and 25 and then the similar actions are reciprocated.

Next, the material module 11 and the product module 15 will be described (see Fig. 1).

In the frame 13 of the material module 11, a palette P1 on which a plurality of material pieces W1 in an overlapping state are placed and a palette P3 on which a plurality of material pieces W3 in an overlapping state are placed are installed. The respective palettes P1 and P3 are installed at positions apart from each other in the Y-axis direction, and therefore the respective material pieces W1 and W3 are stored at positions apart from each other in the material module 11.

In the frame 17 of the product module 15, a palette P5 on which a plurality of products W5 in an overlapping state are placed is provided.

Next, the transport means 19 will be described with reference to Fig. 1.

The transport means 19 is configured to once lift the material piece W1 or the material piece W3 in the material module 11 upward in the Z-axis direction, transport it from the material module 11 to the positioning device 3 of the positioning welding module 7 in the X-axis direction, bring down the material piece W1 or W3 above the positioning device 3 downward in the Z-axis direction, and then place the material pieces W1 and W3 respectively on the tables 23 and 25.

Describing in further detail, a first rail member 41A common for the respective modules 7, 11 and 15, which extends long in the X-axis direction over one end portion side of the Y-axis direction (over the palette P1 and the positioning device 3) in the respective frames 9, 13 and 17 of the respective modules 7, 11 and 15, is installed to be supported by any of the frames 9, 13 and 17.

Further, a first carriage 43A engages with the first rail member with a not-shown linear bearing or such intervening therebetween so as to be movable in the X-axis direction. Meanwhile, the first carriage 43A is made capable of moving and being positioned in the X-axis direction by means of a not-shown mechanism such as a rack and pinion mechanism and an actuator such as a servomotor.

Further, a first Z-axis member 45A extending long in the Z-axis direction engages with the first carriage 43A so as to be movable in the Z-axis direction, and the first Z-axis member 45A is made to move in the Z-axis direction by means of a not-shown ball screw or such and an actuator such as a servomotor.

Further, at the lower end portion of the first Z-axis member 45A, a grip device (not shown) for gripping the material pieces W1 one by one is installed.

Thereby, placing the material pieces W1 placed on the palette P1 one by one on the table 23 of the positioning device 3 is enabled.

Moreover, in the respective frame 9, 13 and 17 of the respective modules 7, 11 and 15 and over the other end portion of the Y-axis direction, a second rail member 41B, which extends long in the X-axis direction over the other end portion side of the Y-axis direction as similar to the first rail member 41A, is installed. A second carriage 43B engages with the second rail member 41B as similar to the first carriage 43A and a second Z-axis member 45B engages with the second carriage 43B as similar to the first Z-axis member 45A. At the lower end portion of the second Z-axis member 45B, a grip device for gripping the material pieces W3 as similar to the aforementioned grip device is installed.

Thereby, placing the material pieces W3 placed on the palette P3 one by one on the table 25 of the positioning device 3 is enabled.

The respective carriages 43A and 43B are connected with each other via a not-shown connection member so that the second carriage 43B can be driven subsequently with driving the first carriage 43A. Meanwhile, instead of using the connection member, the respective carriages 43A and 43B may be driven by respective actuators.

Further, the transport means 21 is, also as with the transport means 19, configured to once lift the product W5 generated by welding the material piece W1 and the material piece W3 upward in the Z-axis direction, transport it from the positioning welding module 7 to the palette P5 of the product module 15 in the X-axis direction, bring down the product W5 downward in the Z-axis direction, and then place the product W5 on the palette P5.

Meanwhile, in a case where a distance of transportation of the respective material pieces W1 and W3 in the X-axis direction between the material module 11 and the positioning welding module 7 and a distance of transportation of the product W5 in the X-axis direction between the positioning welding module 7 and the product module 15 are equal with each other, it may be modified so that one actuator drives the respective carriages 43A by connecting the first carriage 43A of the transport means 19 with the first carriage 43A of the transport means 21.

Meanwhile, as described above, because the respective transport means 19 and 21 are configured so as to have a common track (for example, the respective rail members 41A and 41B), it may be asserted that the weld system 1 is provided with a plurality of modules and a transport system common among the respective modules 7, 11 and 15 for transporting the material pieces and the products.

Further, in a case where the respective modules 7, 11 and 15 have a common transport system as such, after installing the respective modules 7, 11 and 15, the respective transport means 19 and 21 are made to be installed.

By the way, it may be modified so that the respective modules have individual transport systems for transporting the material pieces and the products.

For example, in the transport means 19, it may be modified so that a configuration is made, in which the rail member 41A is divided in a predetermined length in the X-axis direction, the divided rail member is installed in a unitary body with the frame 9 so as to extend from the material module 11 to the positioning welding module 7 over the upper portion side of the frame 13 or the frame 9 and at one end portion side in the Y-axis direction, the carriage 43A is engaged with the divided and installed rail member, and the Z-axis member 45A is engaged with the carriage 43A, so that the material piece W1 is allowed to be transported from the material module 11 to the positioning welding module 7, and as with them, a configuration is made, in which the rail member 41B is divided in a predetermined length in the X-axis direction, the divided rail member is installed in a unitary body with the frame 9 so as to extend from the material module 11 to the positioning welding module 7 over the upper portion side of the frame 9 or frame 13 and at another end portion side in the Y-axis direction, the carriage 43B is engaged with the divided and installed rail member, and the Z-axis member 45B is engaged with the carriage 43B, so that the material piece W3 is allowed to be transported from the material module 11 to the positioning welding module 7.

In this case, it may be modified so that the respective carriages 43A and 43B are connected with each other so that one actuator can drive the respective carriages 43A and 43B, or the respective carriages 43A and 43B are not connected with each other so that two actuators individually drive the respective carriages 43A and 43B.

Moreover, it may be modified so that the respective Z-axis members 45A and 45B are connected with each other so that one actuator can be drive the respective Z-axis members 45A and 45B, or the respective Z-axis members 45A and 45B are not connected with each other so that two actuators individually drive the respective Z-axis members 45A and 45B.

Further, the configuration of the transport means 21 may be modified so that the divided respective rail members are installed in the frame 17 or such, as similarly to the transport means 19, so that the product W5 is transported from the positioning welding module 7 to the product module 15.

Moreover, for example, it may be modified so that one or two transport robots are installed at an entrance side (the side of the material module 11) of the frame 9 to constitute the transport means 19 so that the respective material pieces W1 and W3 is transported from the material module 11 to the positioning welding module 7, or similarly, one or two transport robots are installed at an entrance side (the side of the positioning welding module 7) of the frame 17 to constitute the transport means 21 so that the product W5 is transported from the positioning welding module 7 to the product module 15.

By installing individual transport systems for transporting the material pieces and the products as such, after installing the respective modules, it is not necessary to install another transport device.

Furthermore, anything accessible to the respective modules, such as a chain conveyer or a roller conveyer, among the respective modules may be used to constitute the transport means.

Next, actions of the weld system 1 will be described.

Meanwhile, since the actions of the positioning device 3 and the weld device 5 of the weld module 7 are described above already, detailed descriptions thereof will be omitted here.

Moreover, the weld system 1 including the positioning device 3 and the weld device 5 is made to act under control of a not-shown control device.

Further, as an initial state, the respective material pieces W1 and W3 are placed on the respective palettes P1 and P3 and the positioning welding module 7, the positioning device 3 and the weld device 5 are also made in the aforementioned initial state.

First, from the initial state, the respective material pieces W1 and W3 are moved one by one from the material module 11 to the positioning welding module 7 by means of the transport means 19, and then are positioned and welded by the positioning welding module 7.

During positioning and welding them by the positioning welding module 7, the transport means 19 returns back to the material module 11 for transporting the next respective material pieces W1 and W3, the product W5 welded by the positioning welding module 7 is transported to the product module 15 by means of the transport means 21, and simultaneously the next material pieces W1 and W3 are moved one by one by means of the transport means 19.

Such the actions are reciprocated to generate the products W5 one by one from the material pieces W1 and W3.

In accordance with the weld system 1, by forming the system into modules, respective functions required for the weld system 1 can be standardized in advance, thereby, to meet user's demands, it is merely necessary to select and connect modules for necessary to meet the demands. Therefore the system can flexibly respond to the demands of the individual users.

Further, in accordance with the weld system 1, because the weld system is constituted by combining the respective modules 7, 11 and 15, the functions necessary to weld processing can be standard-designed as device modules, and it is enabled that the respective modules are selected according to demands of users to constitute an equipment of the weld system.

Therefore, time required for designing the equipment and time required for production of the equipment can be reduced and the production cost of the equipment can be reduced.

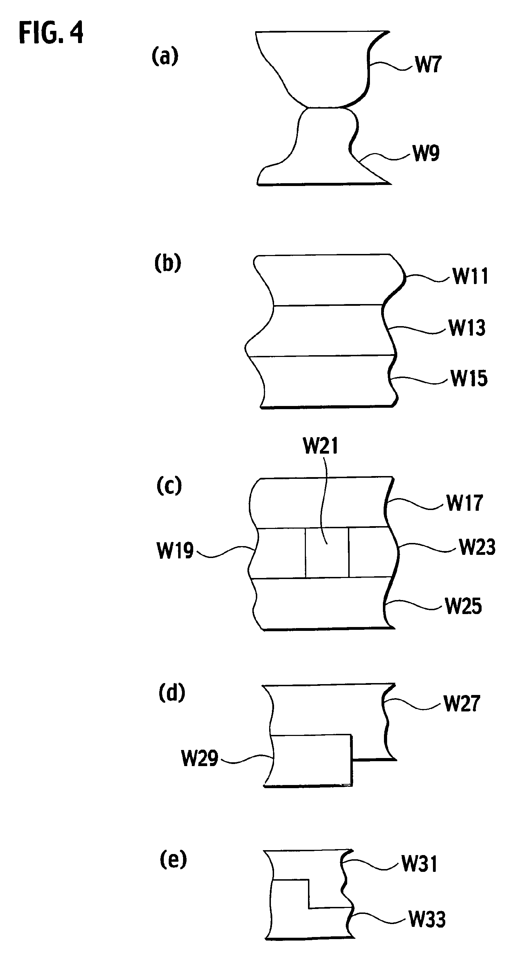

Further, because the weld system 1 is constituted of the respective modules 7, 11 and 15, in a case where the modules are selected according to the demands of the users (for example, even in the same positioning welding module, as described later with reference to Fig. 4, by changing shapes of the material pieces, proper modules are selected from modules in which the configurations are slightly changed), and, in a case where the selected modules are combined to constitute the equipment of the weld system, installation and combination of the respectivemodules canbe easily carried out.

Moreover, even in a case where a specification of the weld system, such as addition of functions, omission of functions, and changes in production subject workpieces, is changed to that such as the respective embodiments described later for example, the change can be done with addition, omission, replacement and change individually to the modules, therefore it can flexibly respond to changes in the specification.

Further, in accordance with the weld system 1, because the modules are combined to constitute the weld system, utility tubing, such as compressed air, weld gas and cooling water, and utility wiring, such as power lines and signal lines, can be laid along the respective modules in advance, and, by such laying, construction with respect to utility laying at a time of installation of the weld system can be simplified.

Further, in accordance with the weld system 1, if the material pieces and the products (workpieces subject to production) are large-sized, degree of increase in transportation distance of the workpieces in the system is relatively small as compared with the prior weld system. More specifically, because the respective functions are not formed in modules in the prior weld system, the transportation distance of the workpieces tends to be greater if the workpieces are large-sized. In contrast, in the weld system 1, because the workpieces are merely necessary to move between the adjacent modules, the degree of elongation of each transportation distance of the workpieces is relatively small.

Therefore, a situation as with the prior weld system, in which workpieces are large-sized to elongate transportation distance and a production takt time is ruled not by time for welding the workpieces but by transportation time, can be avoided, more specifically, even if the workpieces are large-sized, the production takt time can be made to be ruled by the welding time.

Moreover, because devices having functions are installed in standardized frames to constitute modules, the respective modules are substantially equal in an external shape so that installation of the respective modules for formation of the weld system can be made further easier, and construction of laying the utility can be also further simplified.

Meanwhile, in accordance with the weld system 1, the rectangular material pieces W1 and W3 are welded with each other, however, the devices or such in the respective modules 7, 11 and 15 may be properly changed so as to weld material pieces in other shapes or weld three or more material pieces to generate products.

Fig. 4 is a drawing showing shapes of the material pieces welded by means of the weld system 1.

As shown in Fig. 4(a), substantially trapezoidal material pieces W7 and W9 may be welded with each other to generate a product. Meanwhile, in accordance with the positioning device 3 for positioning the respective material pieces W7 and W9 having shapes shown in Fig. 4(a), it is preferable that the pressing device 29 or the pressing device 35 are driven with being controlled in its speed by using an actuator such as a servomotor for definitely positioning the material pieces W1 and W3 so that the material pieces W1 and W3 are positioned by the pressing device 29 or 35.

Similarly, in the positioning devices 31 and 37, any such as servomotors are preferably used.

Further, as shown in Fig. 4(b), the system is such that, in a case of welding three material pieces W11, W13 and W15 with each other, configurations of the positioning device 3 are properly changed as well as configurations in the material module 11 and configurations of the transportation means are properly changed, after positioning and welding the material pieces W11 and the material pieces W13 with each other, those after being welded and the material piece W15 are welded.

Moreover, as shown in Fig. 4(c), the system is such that, in a case of welding four material pieces W17, W19, W21, W23 and W25 with each other, and also, in a case where the weld lines cross each other, positioning of the respective material pieces is curried out with using a jig and the weld torch 39 is moved in the X-axis direction and the Y-axis direction to weld them.

Furthermore, as shown in Fig. 4(d), in a case where a substantially rectangular material piece W29 is welded with two sides of substantially L-letter shaped material piece W27, and as shown in Fig. 4(e), in a case where substantially L-letter shaped material pieces W31 and W33 are welded with each other, these systems are such that positioning is carried out with using a jig as with the case shown in Fig. 4 (c) and the weld torch 39 is moved in the X-axis direction and the Y-axis direction to weld them.

Moreover, in a case where a weld line extends obliquely to the X-axis or is not a linear line but a curved line, the weld torch 39 may move properly in the X-axis direction and the Y-axis direction to carry out welding.

### [SECOND EMBODIMENT]

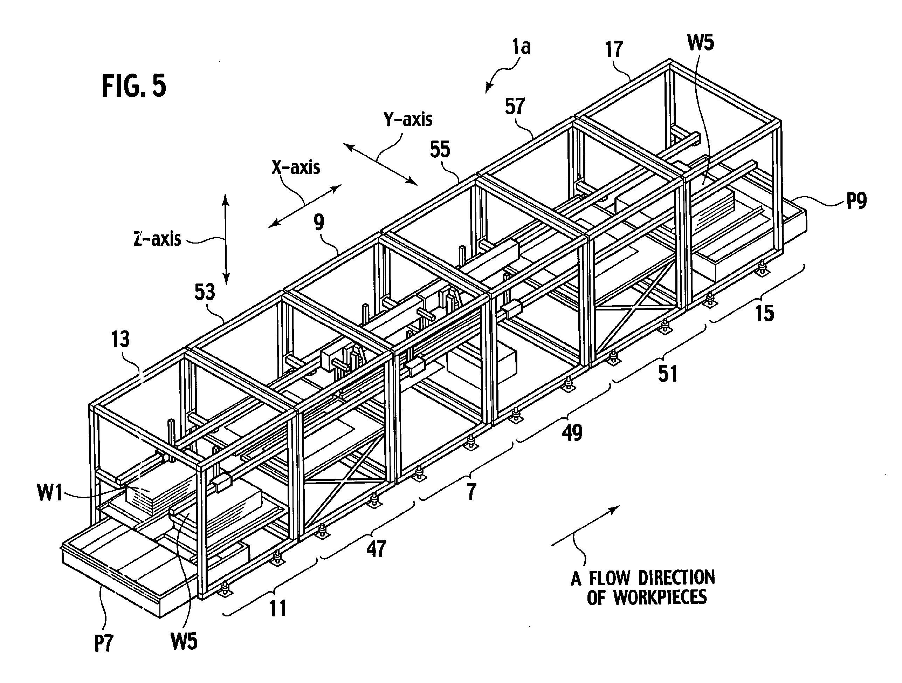

Fig. 5 is a perspective view showing an outlined configuration of a weld system 1a in accordance with a second embodiment of the present invention.

The weld system 1a in accordance with the second embodiment differs from the weld system 1 in accordance with the first embodiment in that the weld system 1a is provided with a DB (Double Blank) module 47 between the material module 11 and the positioning welding module 7, which is an example of a material inspection module for inspecting quality and propriety of the material supplied to the positioning welding module, and further provided with an inspection module 49 between the positioning welding module 7 and the product module 15, which is to inspect weld portion of the product welded at the positioning welding module 7 by, for example, ultrasonic inspection, and a suspected material exhaustion module 51 for exhausting what is judged to be a suspicious piece or an inferior piece as a result of the inspection by the inspection module 49, and the other points thereof are configured as similar to the weld system 1 in accordance with the first embodiment and the system provides substantially the same effects.

Meanwhile, the DB module is a module to detect whether a plurality of pieces are accumulated in the material pieces supplied to the positioning welding module 7. Further, the suspicious piece is what is judged to be suspicious to have weld failure by the inspection module 49, and required for re-inspection by a worker.

Meanwhile, any elements constituted similarly to those of the weld system 1 in accordance with the first embodiment are referred to as the same reference numerals used in the description of the weld system 1.

The DB module 47 is capable of carrying out the aforementioned inspection in a frame 53 as constituted similarly to the frame 9 of the positioning welding module 7. Meanwhile, as a result of the inspection, if the material pieces are accumulated, the accumulated material pieces are made to be exhausted to a platte P7 installed at the lower portion within the frame 53.

Further, the palette P7 is moved to a side of the material module 11, and picked out from the lower portion side of the material module 11 to the exterior of the weld system 1a so that the material pieces exhausted to the palette P7 are made to be exhausted to the exterior of the weld system 1a.

Further, the inspection module 49 is also capable of carrying out the aforementioned inspection in a frame 55 as constituted similarly to the frame 9 of the positioning welding module 7, and a suspected material exhaustion module 51 is also capable of temporarily storing an exhausted suspicious piece at the lower portion side in a palette P9 in a frame 59 as constituted similarly to the frame 9 of the positioning welding module 7.

Further, the palette P9 is moved to a side of the product module 15, and picked out from the lower portion side of the product module 15 to the exterior of the weld system 1a so that the suspicious pieces exhausted to the palette P9 are made to be exhausted to the exterior of the weld system 1a.

Moreover, the respective modules 47, 49 and 51 are provided with physical barriers as similar to the positioning welding module 7.

Further, as described above, in accordance with addition of the respective modules 47, 49 and 51, transportation means similar to the transportation means 19 is added. Therefore, for example, the transportation means is made to be provided between the material module 11 and the DB module 47 and another transportation means is made to be provided between the DB module 47 and the positioning welding module 7. However, it is not necessary to provide transportation means as such, and it may be modified such that merely one transportation means carries out transportation from the material module 11 to the positioning welding module 7.

Further, in the inspection module 49, an embossing device for carrying out embossment (embossment for prevention of displacement of the products W5 in a case where the products W5 are accumulated and piled up) on the product W5 welded at the positioning welding module 7 may be installed.

Moreover, buffer modules each having a buffer function for temporarily storing products W5 out of the positioning welding module 7 may be provided between positioning welding module 7 and the inspection module 49, between positioning inspection module 49 and the suspected material exhaustion module 51, and/or between the suspected material exhaustion module 51 and the product module 15.

Moreover, without specially providing the DB module 47, detection of that a plurality of material pieces are accumulated may be carried out in the frame 13 of the material module 11.

According to the weld system 1a, because the DB module 47 is provided so as to prevent the material pieces from being supplied to the positioning welding module 7 in a state of accumulation of a plurality of material pieces, the material pieces in the state of accumulation of the plurality of material pieces are free from being supplied to the positioning welding module 7 at the downstream side, and thereby generation of inferior products and malfunctions in the weld system 1a can be prevented previously.

Further, according to the weld system 1a, because the inspection module 49 is provided, any products in which any failure exists or has a possibility of existing in the weld portion can be removed.

Moreover, by installing the buffer modules, pulsation of the products in the weld system (production line) 1a can be absorbed (for example, fluctuation of time from carrying out of a product from the positioning welding module to carrying out of a next product can be leveled).

### [THIRD EMBODIMENT]

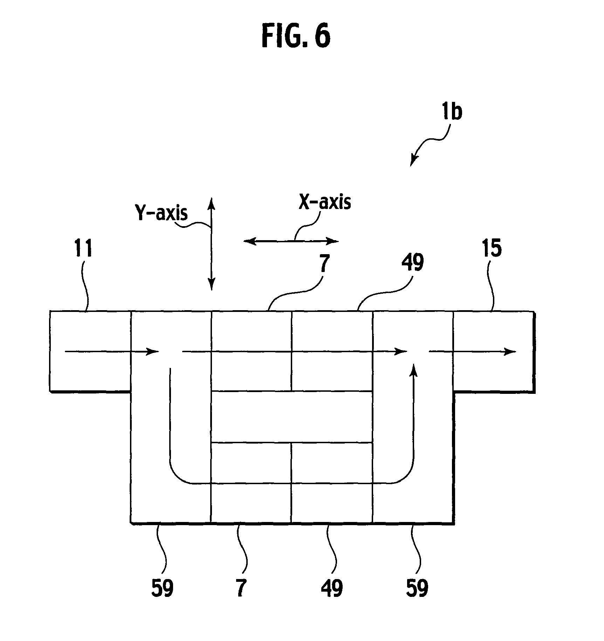

Fig. 6 is a plan view showing an outlined configuration of a weld system 1b according to a third embodiment of the present invention.

The weld system 1b in accordance with the third embodiment differs from the weld systems of the respective embodiments in that a traverse module 59 having a function of branching flows of the material pieces and the products or a function of merging flows of the material pieces and the products is provided between any of the respective modules, and the other points thereof are configured as substantially similar to the weld systems of the respective embodiments and the system provides substantially the same effects.

Meanwhile, the traverse module 59 is provided with a frame similar to that of the positioning welding module 7 or such, and is capable of branching or merging the flows of the material pieces and the products in the frame.

In the weld system 1b, for example, as shown in Fig. 6, the positioning welding modules 7 and the inspection modules 49 are arranged in parallel to form two lines, a traverse module 59 is provided between the material module 11 and the weld module 7, and another traverse module 59 is also provided between the respective inspection modules 49 and the product module 15.

Further, material pieces carried out from the material module 11 are branched at the traverse module 59 and supplied to one line formed of the positioning welding module 7 and the inspection module 49 or another line formed of another positioning welding module 7 and another inspection module 49, and flows of the products welded at the respective lines are merged at another traverse module 59 at the downstream side and supplied to the product module 15.

In accordance with the weld system 1b, because the traverse module 59 is provided, production lines are easy to be multiplexed. More specifically, the positioning welding modules 7 and the inspection modules 49 are arranged in parallel between the material module 11 and the weld module 7, and welding and inspection are carried out in two lines so that the system flexibly respond to increase in production and so on. Further flexible welding system can be easily structured.

### [FOURTH EMBODIMENT]

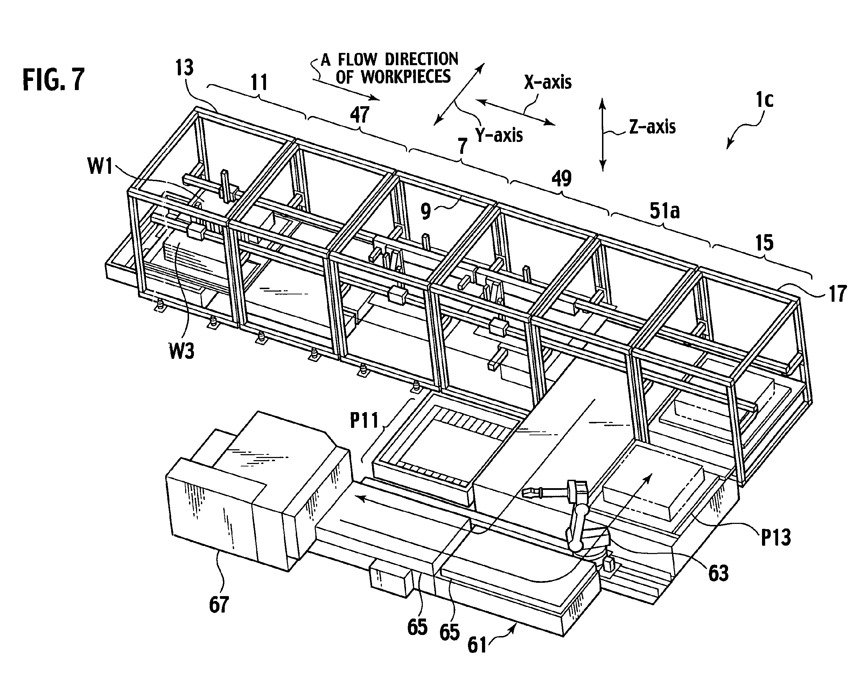

Fig. 7 is a perspective view showing an outlined configuration of a weld system 1c according to a fourth embodiment of the present invention.

The weld system 1c in accordance with the fourth embodiment differs from the weld system 1a of the second embodiment in that a cutting processing station 61 for cutting the products welded at the positioning welding module 7 to generate another products is provided instead of the suspected material exhaustion module 51, and the other points thereof are configured as similar to the weld system 1a and the system provides substantially the same effects.

Meanwhile, any elements constituted similarly to those of the weld system 1a in accordance with the second embodiment are referred to as the same reference numerals used in the description of the weld system 1a.

In the weld system 1c, at a cite where the suspected material exhaustion module 51 of the weld system 1a in accordance with the second embodiment is installed, a frame similar to that of the positioning welding module 7 or such and a product placing module 51a on which the products welded at the positioning welding module 7 and inspected at the inspection module 49 can be placed one by one are provided.

Lateral to the product placing module 51a, a multijoint robot 63 as an example of a transportation means, a truck 65, a laser processing machine 67, a scrap placing palette P11, and a product placing palette P13 for placing products after laser machining are provided.

Further, the system is so constituted that a product supplied form the inspection module 49 to the product placing module 51a is supplied to the truck 65 by means of the robot 63, the truck 65 on which the product is placed is thrown into the laser processing machine 67, and a new product of an intended form are cut out by the laser processing machine 67.

After finishing the laser machining, the truck 65 in a state of placing the new product and a scrap excluding the new product thereon is made to go out of the laser processing machine 67. Subsequently, by means of the robot 63, the scrap is transported to the scrap placing palette P11 and the new product is transported to the product placing palette P13. Further, the palette P13 on which the new product is placed is configured to be transported to the product module 15 by means of a not-shown transportation device.

Meanwhile, a suspicious piece found out at the inspection module 49 is made to be transported to the scrap placing palette P11 by means of the robot 63 after placing it on the product placing module 51a.

In accordance with the weld system 1c, because the cutting processing station 61 for cutting the products welded at the positioning welding module 7 to generate another products is provided, products of various shapes can be easily produced from the products after being welded.

### [FIFTH EMBODIMENT]

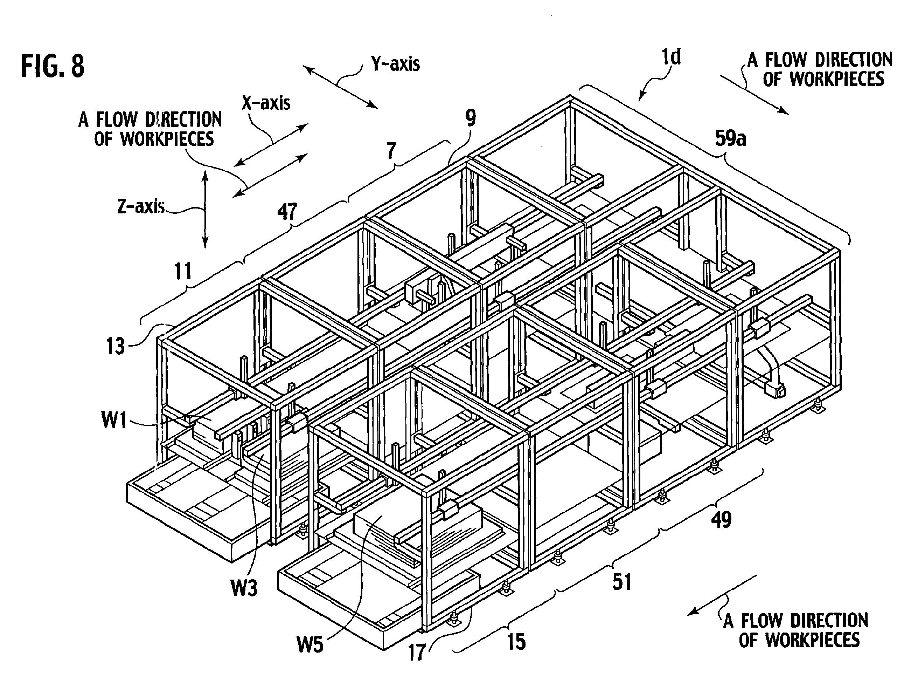

Fig. 8 is a perspective view showing an outlined configuration of a weld system 1d according to a fifth embodiment of the present invention.

The weld system 1d in accordance with the fifth embodiment differs from the weld system 1a of the second embodiment in that a traverse module 59a (a module capable of transporting products received from the positioning welding module 7 one by one in the Y-axis direction to supply them to the inspection module 49) is provided between the positioning welding module 7 and the inspection module 49 and the whole of the weld system is formed in a C-letter shape, and the other points thereof are configured as substantially similar to the weld system 1a of the second embodiment and the system provides substantially the same effects.

Any elements constituted similarly to those of the weld system 1a in accordance with the second embodiment are referred to as the same reference numerals used in the description of the weld system 1a.

Meanwhile, while the weld system is formed in the C-letter shape in the weld system 1d, it may be formed in shapes other than the C-letter shape (for example, a L-letter shape).

Provided that the whole of the weld system is changed in shapes by using the traverse module 59a, layout of flexible disposition in response to an installation space of the weld system can be carried out.

Meanwhile, in the respective embodiments, descriptions are given by illustrating cases in which plate-like material pieces are welded, however, the respective embodiments can be applied to cases where material pieces other than plate-like are welded.

## Claims

1. A weld system **characterized by** installing a device or an apparatus having a function required for welding material pieces to generate products in frames standardized in advance to form device modules, and in that the system is constituted by combining modules having the respective functions to generate the products.

2. A weld system as recited in claim 1, **characterized in that**:
the device or the apparatus having the function is provided in the frame and a physical barrier for ensuring safety of workers at a time of action of the device or the apparatus, welding and processing is provided on the module.

3. A weld system as recited in claim 1 or 2, **characterized in that**:
the weld system comprises a plurality of modules and a transportation system for transportation of the material pieces and the products in common for the respective modules.

4. A weld system as recited in claim 1 or 2, **characterized in that**:
the weld system comprises a plurality of modules and the respective modules individually comprise transportation systems for transportation of the material pieces and the products.

5. A weld system as recited in any of claims 1-4, **characterized by** having:
as the modules;
a positioning welding module comprising a material piece positioning device and a welding device capable of welding material pieces positioned by the material piece positioning device:
a material module for stocking material pieces to be supplied to the positioning welding module; and
a product module for stocking products welded at the positioning welding module.

6. A weld system as recited in claim 5, **characterized by** comprising:
as the module;
a material inspection module for inspecting the material pieces to be supplied to the positioning welding module between the material module and the positioning welding module.

7. A weld system as recited in claim 5 or 6, **characterized by** comprising:
as the module;
an inspection module for inspecting products welded at the positioning welding module between the positioning welding module and the product module.

8. A weld system as recited in any of claims 5-7, **characterized by** comprising:
as the module;
a traverse module having a function of branching flows of the material pieces and the products, or a function of merging flows of the material pieces and the product.
